# EUROPÄISCHE PATENTANMELDUNG

(11) **EP 1 577 733 A2**
(43) Veröffentlichungstag der Anmeldung: **21.09.2005**
(21) Anmeldenummer: 05001787.0
(22) Anmeldetag: 28.01.2005
(51) Int. Cl.: G06F 1/00, G10L 17/00

(54) **Verfahren und System zur Personen-/Sprecherverifikation über Kommunikationssysteme**

(30) Priorität: 18.03.2004 DE 102004014416
(71) Anmelder: Deutsche Telekom AG, 53113 Bonn (DE)
(72) Erfinder: Trinkel, Marian, Dipl.-Ing., 52372 Kreuzau OT Untermaubach (DE); Müller, Christel, Dipl.-Ing., 15732 Schulzendorf (DE); Runge, Fred, Dipl.-Ing., 15838 Wünsdorf (DE)

(57) **Zusammenfassung**

Die Erfindung bezieht sich auf ein Verfahren und ein System zur Personen/Sprecherverifikation über unterschiedliche Kommunikationssysteme. Wesentliche Komponenten des Systems sind eine Steuerlogik (SL) mit Zugriff auf ein sprachgesteuertes Dialogsystem (DS) mit zur Abfrage abgespeicherten Verifikationsdialogen, ein Biometrik Kundenprofil (BK), in dem die personenbezogenen biometrischen Daten von Kunden gespeichert sind, und eine Provider Datenbank (PD), die Informationen zu geschützten Datenbankbereichen und Diensten in Verbindung mit den zur Verifikation zugelassenen biometrischen Verfahren enthält. Das Verfahren zur Personen/Sprecherverifikation ist darauf ausgerichtet, unterschiedliche personenbezogene biometrische Daten, die geeignet sind die Zugangsberechtigung eines Kunden eindeutig festzustellen, über Telekommunikationssysteme zu ermitteln, zu übertragen, zu analysieren und zu bewerten.

## Beschreibung

Die Erfindung bezieht sich auf ein System und ein Verfahren, das der Personen/Sprecherverifikation von Teilnehmern über unterschiedliche Kommunikationssysteme dient, nach dem Oberbegriff des 1. Patentanspruches.

Bekannt ist es, einen Telekommunikationsanschlusses über die in verschiedenen Telekommunikationsnetzen übermittelte Anschlusskennung CLI (Calling Line Identification), ANI (Automatic Number Identification), IP-Adresse (Internet Protokoll Adresse) oder HLR (Home Location Register) zu identifizieren.

Die Unterscheidung der einzelnen Nutzer eines Telekommunikationsanschlusses ist durch Abfrage einer personengebundenen Kennung, wie beispielsweise einer PIN, möglich. Die PIN ist dabei eine persönliche Geheimnummer, mit der sich ein Nutzer gegenüber einem System ausweist.

Weiterhin sind Spracherkennungssystemen und Sprechererkennungssysteme bekannt. Bei den Spracherkennungssystemen wird der Inhalt einer gesprochenen Äußerung erkannt. Die allgemein bekannten Spracherkennungssysteme beruhen auf der Grundlage von Spracherkennungsalgorithmen wie beispielsweise der Systemlieferanten nuance communications, oder Temic, die eine größere Anzahl von Wörtern in Echtzeit erkennen können.

Werden derartige Algorithmen für die sprachgesteuerte Bedienung, beispielsweise der Funktionen eines Telekommunikationsendgerätes, verwendet, besteht das Problem der Erkennung/ Identifizierung eines konkreten Nutzers. Dieses Problem wird durch Sprechererkennungssysteme gelöst. Zu dieser Gruppe gehören insbesondere Sprecherverifikationssysteme. Bei Sprecherverifikationssystemen wird die von einer Person behauptete Identität durch Analyse eines Musters der Stimme dieser Person geprüft. Das Prinzip der Sprecherverifikation beruht auf der Annahme, dass jede Person eindeutig durch ihre Stimme identifiziert werden kann. Der Sicherheitsstandard einer derartigen Lösung hängt davon ab, wie gut der Verifikationsalgorithmus die Stimme eines autorisierten Nutzers von allen nicht autorisierten Nutzern unterscheiden kann. Dieses Prinzip erfordert jedoch erhebliche Investitionen in Zeit und Aufwand zur Durchführung eines bei diesem Lösungsansatz erforderlichen Trainingsprozesses des betreffenden Verifikationssystems. Weitere bekannte biometrische Personen/Sprecherverifikationssysteme beruhen beispielsweise auf dem Vergleich eines Finger-Abdruckes, dem Vergleich der Hand-Geometrie, dem Vergleich der Retina, dem Vergleich des Gesichts oder einen Vergleich der Unterschrift.

Ein weiterer bekannter Lösungsansatz zur Feststellung der Identität einer Person beruht auf der Technik der Verifikation mittels verbaler Informationen (VIV). Dabei handelt es sich um Informationen, die nur dem zu verifizierenden Teilnehmer selber bekannt sind und deren Inhalt bezüglich Frage und Antwort zwischen dem Dienstanbieter und dem zu verifizierenden Teilnehmer in einem der eigentlichen Verifikation vorgelagerten Prozess festgelegt wurde. Das kann beispielsweise ein persönlicher Legitimationssatz, eine PIN, ein Geburtsort, ein Geburtsname oder eine Wohnadresse sein.

So ist beispielsweise aus DE 195 27 022 C2 ein Verfahren zur Authentisierung von Dienste-Benutzern, insbesondere zur Authentisierung von Benutzern eines Sprach-Mehrwertdienst, Virtual Card Calling (VCC), und Authentisierungskarte dazu bekannt, bei dem für jeden Dienste-Benutzer ein benutzerindividuell festgelegte Informationsmenge, bestehend aus einer Abfragemenge und einer Menge zugehörigen Antworten, gespeichert wird. Aus der Abfragemenge werden eine oder mehrere Abfragen ausgewählt und dem Benutzer zur Beantwortung zugesendet. Nur bei Übereinstimmung der vom Kunden eingegebenen Antworten mit den jeweiligen zentral zu den Fragen gespeicherten Antworten, wird dem Benutzer der Zugang zu dem gewünschten Dienst freigegeben. Dieser Lösung liegt eine aus Fragen und den dazugehörenden Antworten bestehende, in sich geschlossene Informationsmenge zugrunde, die vorab mit dem Benutzer abgestimmt wurde.

D698 00 320 T2 beschreibt ein Verfahren und eine Vorrichtung zur Sprecherkennung durch Prüfung von mündlicher Information mittels Zwangsdekodierung. Diese Lösung basiert ebenfalls auf der Prüfung des verbalen Informationsgehaltes, welcher in einer vom Sprecher abgegebenen Äußerung enthalten ist. Die Sprecherverifikation erfolgt dabei auf der Grundlage einer forcierten Decodierung der gesprochenen Äußerung, die auf einem speziellen Legitimierungssatz beruht, welcher einem vorgegebenen Sprecher zugeordnet ist. Bei dieser Lösung wird ebenfalls auf einen bereits mit dem Nutzer abgesprochenen Text zurückgegriffen.

In DE 698 14 195 T2 wird eine Vorrichtung zur Sprechererkennung bzw. ein Sprechererkennungsverfahren beschrieben, bei dem die Sprecherverifikation auf der Abfrage einer Kennung, eines vorabgestimmten Textes und eines Kennwortes vom zu verifizierenden Teilnehmer erfolgt.

Aus DE.1981 2897 ist ein Verfahren zur Bereitstellung von telekommunikationsgestützten Dienstleistungen bekannt, bei dem über einen Dialog einem Kunden aus einer Vielzahl von möglichen Diensten eine Variante zur Verfügung gestellt wird, die er für die Lösung seines Problems bzw. seines Dienstleistungswunsches benötigt. Dabei wird geprüft, ob der Kunde auf die für diese Variante benötigte Endgerätekonfiguration Zugriff hat, bzw. dass die Endgerätekonfiguration des Kunden den der Variante zugrunde liegenden Dienst bzw. die Dienstkombination unterstützt.

Bei allen bekannten Lösungen zur Personenerkennung handelt es sich zumeist um Einzellösungen. Das ist insbesondere auch bei den Verifikationssystemen der Fall, die auf der Auswertung von personenbezogenen biometrischen Daten beruhen. Bei diesen Systemen wird nach erfolgreicher Verifikation der Zugang zu einem durch dieses System geschützten Bereich oder Dienst gewährt. Verläuft die Verifikation nicht erfolgreich, wird der Zugang verweigert, oder es wird eine zusätzlicher Verifikationsversuch, vorzugsweise nach dem Prinzip der Verifikation mittels verbaler Informationen, durchgeführt. Das trifft insbesondere auch auf Dienstangebote von Dienstleistern/Providern zu, die den Zugang zu ihren Diensten mit Hilfe eines biometrischen Verfahrens begrenzen.
Innerhalb der "mobilen Gesellschaft" nimmt das Bedürfnis immer mehr zu, an jedem Ort und zu jeder Zeit, vorzugsweise über das Internet, Zugriff auf Datenbanken von Dienstleistern zugreifen zu können bzw. Dienste von Dienstleistern/Providern in Anspruch zu nehmen. Für den mobilen Zugang zu diesen Diensten ist jedoch ein besonderes Sicherheitsmanagement erforderlich, das den Zugriff auf interne Daten bzw. geschützte Bereiche und Dienste mit der erforderlichen Sicherheit garantiert.
Die Aufgabe der Erfindung ist auf eine Lösung ausgerichtet, die einem Kunden im Bedarfsfall eine Vielzahl von Möglichkeiten zur Personen/Sprecherverifikation im Rahmen eines komplexen Sicherheitsmanagements zugänglich machen soll.
Die Aufgabe wird durch ein Verfahren und ein System gelöst, das insbesondere den mobilen den Zugang des Kunden zu den vorzugsweise durch biometrische Sicherheitssysteme geschützten Datenbankbereichen bzw. Diensten eines Dienstanbieters/Providers unterstützt.

Die Erfindung bezieht sich auf einem System und ein Verfahren zur Personen/Sprecherverifikation. Wesentliche Komponenten des Systems sind eine Steuerlogik SL mit Zugriff auf
- ein sprachgesteuertes Dialogsystem DS mit zur Abfrage abgespeicherten Verifikationsdialogen (Verifikations-Abfragemodul V).
- ein Modul zur Bestimmung des Telekommunikationsanschlusses TA
- einer Datenbank für Biometrik Kundenprofile BD, in der die Biometrik Kundenprofile BK gespeichert sind und
- eine Provider Datenbank PD

Das Verfahren zur Personen/Sprecherverifikation ist darauf ausgerichtet, unterschiedliche personenbezogene biometrische Daten, die geeignet sind die Zugangsberechtigung eines Kunden eindeutig festzustellen, über Telekommunikationssysteme zu ermitteln, zu übertragen, zu analysieren und zu bewerten. Dadurch ist es möglich, unter Beachtung der für den Zugang erforderlichen Sicherheitsanforderungen, alle einem Kunden zur Verfügung stehenden Verifikationsmöglichkeiten auszuschöpfen, um den Zugangswunsch eines berechtigten Kunden zu einem geschützten Datenbankbereich bzw. zu einem geschützten Dienstangebot eines Dienstanbieters/Providers zu ermöglichen.
Erfindungsgemäß wird für jeden Kunden, entsprechend seinen Kommunikationsdaten und seinem Kommunikationsverhalten, ein individuelles Biometrik Kundenprofil BK erstellt und in einer Datenbank für Biometrik Kundenprofile BD abgespeichert. Dabei beziehen sich die Kommunikationsdaten auf die dem Kunden zur Verfügung stehenden Endgeräte bzw. Endgerätekonfigurationen. Das Kommunikationsverhalten bezieht sich auf die vom Kunden üblicherweise in Anspruch genommenen Kommunikationsangebote, die beispielsweise über Datenbanken, Datenbankbereichen und Dienste von Dienstanbietern/Providern angeboten werden. Im erfindungsgemäßen Biometrik Kundenprofil BK sind auch alle dem Kunden zur Verfügung stehenden Endgeräte und Endgerätekonfigurationen enthalten, die für eine Verifikation anhand biometrischer Daten geeignet sind. Dabei ist jedes Endgerät bzw. jeder Endgerätekonfiguration mit der dazugehörenden Anschlusskennung verknüpft. Die Anschlusskennung ermöglicht es, ein Endgerät bzw. eine Endgerätekonfiguration
a) eindeutig identifizieren und b) dem Besitzer des Anschlusses eindeutig zuzuordnen. Gleichzeitig ist/sind jedem Endgerät und jeder Endgerätekonfiguration und damit auch jeder Anschlusskennung das biometrische Verfahren bzw. die biometrischen Verfahren zugeordnet, über die mittel des Endgerätes bzw. der Endgerätekonfiguration ein Verifikationsvorgang technisch realisiert werden kann.
Zur Erstellung seines individuellen Biometrik Kundenprofils BK muss sich der Kunde vor der Benutzung registrieren lassen. In einem Registrierungsprozess werden alle biometrischen Grunddaten des Kunden, die aufgrund seiner Endgeräte bzw. Endgerätekonfiguration möglich sind, ermittelt und in seinem individuelle Biometrik Kundenprofil BK hinterlegt.
Im Ergebnis des Registrierungsprozesses liegt im Rahmen einer Datenbank für Biometrik Kundenprofile BD für jeden Kunden ein individuelles Biometrik Kundenprofil BK vor, das es ermöglicht, dass dem Kunden entsprechend den technischen Möglichkeiten seiner Endgeräte bzw. Endgerätekonfigurationen im Bedarfsfall automatisch nacheinander alle Verifikationsmöglichkeiten zur Verfügung gestellt werden können, die für den Zugang zu einem geschützten Datenbankbereich oder Dienst zugelassen sind.

Ruft ein Kunde, für den ein Biometrik Kundenprofil BK bereits erstellt wurde, auf einem Portal an, auf dem die erfindungsgemäße Lösung als Systemlösung E implementiert ist, und äußert den Zugangswunsch zu einem biometrisch geschützten Datenbankbereich oder Dienst D, so wird von einer matrixartig strukturierte Steuerlogik SL, die Zugriff auf ein Modul zur Bestimmung des Telekommunikationsanschlusses TA und die Datenbank für Biometrik Kundenprofile BD hat, anhand der Anschlusskennung des vom Kunden für den Anruf benutzten Endgerätes bzw. der Endgerätekonfiguration im Abgleich mit den Daten des Biometrik Kundenprofils BK erkannt, welche Endgeräte bzw. Endgerätekonfigurationen dem Kunden für eine Verifikation anhand biometrischer Verfahren zur Verfügung stehen. Durch die vom Kunden gewählte Zielrufnummer lässt sich erkennen welchen Dienstleistungswunsch der Kunde hat bzw. zu welchem geschützten Datenbankbereich bzw. auf welchen mittels biometrischer Verifikationsverfahren gesicherten Dienst D der Kunde den Zugang wünscht. Anhand einer Provider-Datenbank PD, in der alle auf dem Portal angebotenen Datenbankbereiche bzw. Dienste in Verbindung mit den dazugehörenden Zugangsadressen/Zugangsrufnummern und Zugangsbedingungen gespeichert sind, werden über die matrixartig strukturierte Steuerlogik SL die Zugangsbedingungen ermittelt, die den Zugang des Kunden zum gewünschten Datenbankbereich bzw. Dienst D regeln. Unter Zugangsbedingungen im Sinne der Erfindung ist die Auflistung der biometrischen Verifikationsverfahren zu verstehen, die für den Zugang zum gewünschten Dienst D zugelassen sind.
Durch die Steuerlogik SL werden die dem Kunden zur Verfügung stehenden Endgeräte und Endgerätekonfigurationen mit den für den gewünschten Dienst D festgelegten Zugangsanforderungen abgeglichen. Durch diesen Vergleich wird festgestellt, welche für den betreffenden Dienst D zugelassenen Verifikationsmöglichkeiten dem Kunden aufgrund seiner Endgeräte bzw. Endgerätekonfiguration zur Verfügung stehen. Die so ermittelten Daten werden einem sprachgesteuerten Dialogsystem DS zur Verfügung gestellt, über das die weitere Interaktion zur Realisierung des Zugangswunsches des Kunden erfolgt.
Das Dialogsystem DS bietet dem Kunden im Rahmen entsprechend vorprogrammierter Dialoge nacheinander von allen für den betreffenden Dienst D zugelassenen Verifikationsmöglichkeiten nacheinander die Verifikationsmöglichkeiten an, die dem Kunden technisch zugänglich sind. Der über die Steuerlogik SL in Verbindung mit dem sprachgesteuerten Dialogsystem DS gesteuerte Dialog zwischen den Dialogsystem DS und dem Kunden wird so lange fortgesetzt, bis durch einen erfolgreichen Verifikationsversuch der Zugang zum gewünschten Dienst D freigegeben wird, oder bis alle für den Dienst D zugelassenen und durch die Endgerätekonfiguration des Kunden gestützten Verifikationsmöglichkeiten ausgeschöpft sind. Die Lösung bietet natürlich auch die Möglichkeit, den Zugang zu einem gesicherten Bereich bzw. Dienst D von der Verifizierung über mindestens zwei unterschiedliche Verifikationsverfahren abhängig zu machen.

Das erfindungsgemäße Verfahren wird anhand eines Ausführungsbeispiels näher erläutert.
Fig. 1 zeigt anhand eines Blockdiagramms eine für die Realisierung des Dienstes mögliche Architektur.

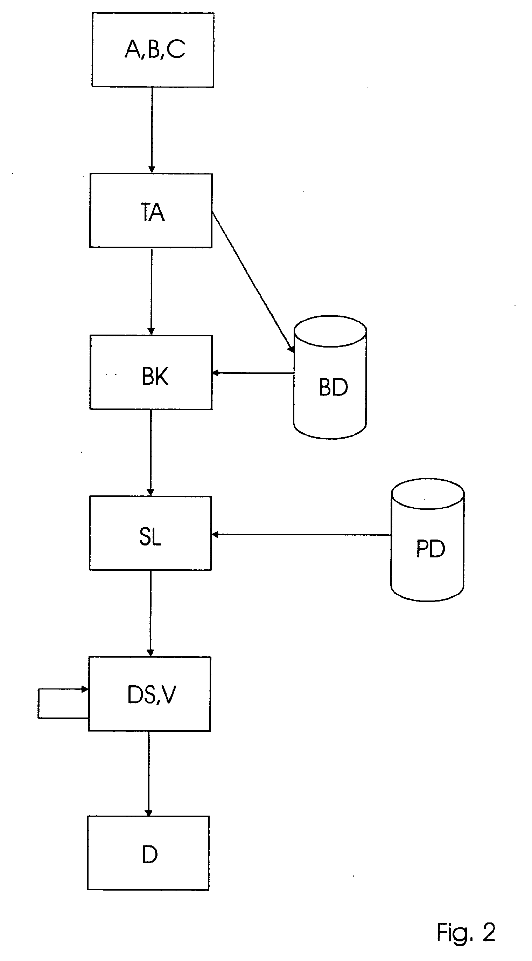

In Fig. 2 ist ein mögliches Ablaufschema für den Verifikationsprozess dargestellt

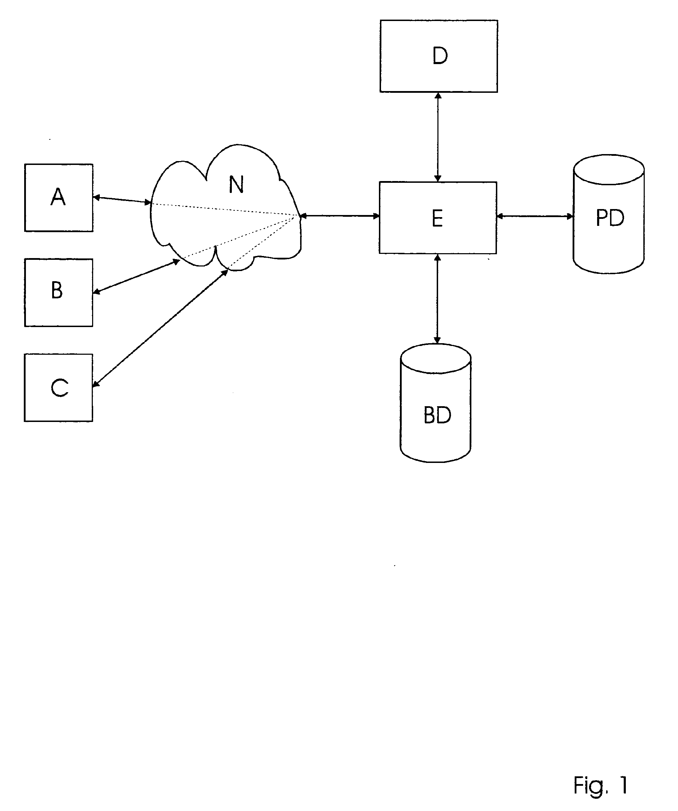

Das erfindungsgemäße Verfahren wird anhand eines Beispiels erläutert, bei dem der Kunde über einen PC mit Scanner A, ein Handy mit eingebauter Kamera B und ein Faxgerät C verfügt (siehe Fig.1).
Der Kunde wählt über seinen PC mit Scanner A das Portal an, auf dem die erfindungsgemäße Lösung als System E implementiert ist und äußert seinen Zugangswunsch zu dem gewünschten, mittels biometrischer Verifikationsverfahren, gesicherten Dienst D. Der Zugriffswunsch des Kunden bzw. die Zielrufnummer/Zieladresse des gewünschten Dienstes D wird entweder im Rahmen eines Sprachdialoges des Kunden mit einem Dialogsystem DS des Portals oder anhand der vom Kunden eingegebenen Daten erfasst. Gleichzeitig erfolgt auch die Erfassung der Anschlusskennung des Endgerätes, von dem der Kunde anruft. Die Erfassung der Anschlusskennung des Anrufers und der von Anrufer gewählten Zielrufnummer/Zieladresse erfolgt dabei über ein Modul zur Bestimmung des Telekommunikationsanschlusses TA. Über die Datenbank für Biometrik Kundenprofile BD, der alle Biometrik Kundenprofile BK der am System beteiligten Kunden zugeordnet sind, werden über die Anschlusskennung die im Biometrik Kundenprofil BK enthaltenen kundenspezifischen Daten des der Anschlusskennung zugeordneten Kunden erfasst und an die an die Steuerlogik SL weitergeleitet.
Von der matrixartig ausgebildete Steuerlogik SL wird eine Verbindung zu der Provider Datenbank PD aufgebaut. Durch einen Vergleich der in der Provider-Datenbank PD gespeicherten Daten mit der Zielrufnummer/Zieladresse zu welcher der Kunde den Zugang wünscht, werden der vom Kunden gewünschte Dienst D und die für den Dienst D zugelassenen biometrischen Verifikationsverfahren von der Steuerlogik SL erfasst und ausgewertet.
Im Rahmen des Ausführungsbeispiels sind die nachfolgend aufgeführten biometrischen Verifikationsverfahren für den vom Kunden gewünschten Dienst D zugelassen:
1. Verifikation auf der Basis des Sprechererkennung anhand des Vergleiches der Sprachparameter eines Kennwortes,
2. Verifikation auf der Basis der Gesichtserkennung,
3. Verifikation auf der Basis des Vergleiches eines Fingerabdruckes.
Aufgrund der Daten aus der Provider Datenbank PD baut die Steuerlogik SL eine Verbindung zu der Datenbank für Biometrik Kundenprofile BD auf in der die individuellen Biometrik-Kundenprofile BK der für den Dienst D zugelassenen Kunden gespeichert sind. Der Zusammenhang zwischen Kunden und dem vom Kunden gewünschten Dienst ergibt sich dabei aus der Anschlusskennung des Endgerätes des Kunden und der vom Kunden gewählten Zielrufnummer/Zieladresse des gewünschten Dienstes.
Über die Anschlusskennung des Kundenendgerätes, über das der Kunde auf das Portal zugegriffen hat, hier der PC mit Scanner A mit der IP- Adresse als Anschlusskennung, ermittelt die Steuerlogik SL das individuelle Biometrik Kundenprofil BK des betreffenden Kunden und damit auch die Verifikationsmöglichkeiten, die dem Kunden im Rahmen seiner Endgeräte bzw. seiner Endgerätekonfiguration zur Verfügung stehen. Im Ausführungsbeispiel verfügt der Kunden neben dem PC mit Scanner A, über ein Handy mit Kamera B und ein Faxgerät C. Bedingt durch diese Endgeräte bzw. Endgerätekonfigurationen stehen dem Kunden folgende Verfahren für die Verifikation anhand biometrischer Merkmale für den Zugang zum Dienst D zur Verfügung:
- PC, A:: Unterschrift, Finger/Hand Abdruck (PC mit Scanner)
- Handy mit Kamera, B:: Gesichts-Erkennung, Retina-Abtastung, Stimmerkennung
- Fax Gerät, C:: Unterschrift, Finger/Hand-Abdruck

Nach Abgleich der für den Zugang zum gewünschten Dienst D in der Provider-Datenbank PD festgelegten biometrischen Verfahren mit dem Daten des Biometrik Kundenprofils BK des anrufenden Kunden, werden über die Steuerlogik SL die biometrischen Verifikationsverfahren ermittelt, die dem Kunden aufgrund seiner Endgeräte bzw. Endgerätekonfigurationen zur Verfügung stehen.
Im Ausführungsbeispiel stehen dem Kunden alle Verifikationsmöglichkeiten offen, die im Rahmen des gewünschten Dienstes alternativ zugelassen sind.
Für einzelne biometrische Verifikationsverfahren stehen dem Kunden zumeist sogar mehrere Endgeräte zur Verfügung. So kann beispielsweise die Verifikation anhand des Finger-Abdruckes und anhand der Unterschrift des Kunden über den PC A des Kunden vorgenommen werden, da am PC A des Kunden ein Scanner angeschlossen ist. Gleichzeitig steht dem Kunden jedoch auch ein Fax-Gerät C für die gleichen Verifikationsmöglichkeiten zur Verfügung.
Die über die Steuerlogik SL ermittelten möglichen Verifikationsverfahren werden einer automatischen Bewertung in Bezug auf die Reihenfolge der dem Kunden nacheinander anzubietenden Verifikationsverfahren unterzogen.
Durch eine sinnvolle Auswahl der Reihenfolge, in der die möglichen Verifikationsverfahren dem Kunden angeboten werden, wird ein Effekt erreicht der vorher so nicht zu erwarten war. Dieser Effekt erhöht zusätzlich die Sicherheit bei der Verifikation und wird dadurch erreicht, dass bei dem Übergang von einem Verifikationsverfahren zu einem anderen Verifikationsverfahren gezielt das Mittel eines Medienbruches eingesetzt wird. Unter Medienbruch ist dabei zu verstehen, dass auf einen Wechsel des Verifikationsverfahrens auch ein Wechsel des Kommunikationsmediums über das die Verifikation durchgeführt werden soll, erfolgt. Für das Ausführungsbeispiel, bei dem der Zugriff des Kunden auf das Portal über das Internet erfolgt ist, würde das bedeuten, dass dem Kunden für seinen ersten Verifikationsversuch beispielsweise die Verifikation über sein Handy B angeboten wird. Falls der Verifikationsversuch über das Handy B nicht erfolgreich abgeschlossen werden kann, wird dem Kunden als zweite Verifikationsmöglichkeit beispielsweise die Verifikation über das Festnetz unter Einbeziehung seines Fax- Gerätes C angeboten usw.

Nach einer anhand des o.g. Auswahlprinzips erfolgten automatische Festlegung der Reihenfolge in der die Verifikationsmöglichkeiten dem Kunden anzubieten sind, wird von der Steuerlogik SL über das Dialogsystem DS, in Verbindung mit einem Verifikations-Abfragemodul V, die erste Verbindung zu dem Endgerät des Kunden aufgebaut, über das der Kunde zur Durchführung der Verifizierungsprozedur aufgefordert werden soll. Im Ausführungsbeispiel wird von der Steuerlogik SL das Handy B des Kunden angesteuert. Nimmt der Kunde den Anruf auf seinem Handy B entgegen, wird er über das sprachgesteuerte Dialogsystem DS beispielsweise aufgefordert, mündlich ein vereinbartes Passwort für die Stimmerkennung einzugeben. Nach Eingabe des Passwortes wird das eingegebene Passwort über die Steuerlogik SL mit dem im Biometrik-Kundenprofil BK für den Kunden für die Sprechererkennung gespeicherten Sprachprofil verglichen. Bei Übereinstimmung der Sprachparameter wird über die Steuerlogik SL die Verbindung zu dem vom Kunden angewählten Dienst D freigegeben und der Kunde wird automatisch mit dem gewünschten Dienst D verbunden. Falls der erste Verifikationsversuch des Kunden nicht erfolgreich war, wird das von der Steuerlogik SL erkannt. In diesem Fall wird entsprechend der vorher festgelegten Reihenfolge ein zweiter Verifikationsversuch von der Steuerlogik SL initiiert. Der zweite Verifikationsversuch kann dem Kunden über sein Fax C angeboten werden. Über das Fax C kann der Kunde beispielsweise aufgefordert werden, seine Unterschrift oder eine Abbildung seiner Handfläche abzugeben. Bei Abgabe der Unterschrift wird die vom Kunden über das Fax eingegangene Unterschrift mit einer Unterschriftsprobe des Kunden, die im Biometrik Kundenprofil BK des Kunden hinterlegt ist, verglichen. Bei Übereinstimmung wird dem Kunden automatisch der von ihm gewünschte Dienst freigegeben.

Nach den oben beschriebenen Prinzipien werden dem Kunden nacheinander alle Verifikationsmöglichkeiten angeboten, die für den Zugang zum gewünschten Dienst zugelassen sind. Dabei werden alle Möglichkeiten ausgeschöpft, die dem Kunden im Rahmen seiner Endgeräte bzw. Endgerätekonfiguration und der Örtlichkeiten der Kommunikationssysteme zur Verfügung stehen.
Mit der Erfindung steht eine Lösung zur Verfügung, die den Zugang eines Kunden zu Datenbanken und Diensten, die mittels biometrischer Verifikationsverfahren geschützt sind, wesentlich erleichtert. Ein großer Vorteil dieser Lösung besteht darin, dass eine Trennung zwischen Verifikationsprozess und Dienst des Providers selber vorgenommen werden kann. In einem solchen Fall bestimmt der Provider nur noch die Verifikationsverfahren, die er für den Zugang zu seinem Dienst/Diensten zulassen will. Die Erfindung bietet weiter den Vorteil, dass alle Komponenten, die für die Verifikation notwendig sind, im Rahmen einer eigenständigen einheitlichen Lösung, sowohl dezentral, als auch zentral angeordnet werden können. Damit läuft der eigentliche Verifikationsprozess für alle über das Portal zugänglichen Datenbankbereiche bzw. Dienste, deren Zugang über unterschiedliche biometrische Verifikationsverfahren abgesichert ist, nach einer einheitlichen, in sich komplexen Lösung ab. Die der Erfindung zugrunde liegende Steuerlogik SL ist aufgrund ihrer matrixartigen Struktur jederzeit erweiterbar und kann daher sofort an sich ändernde Strukturen, sowohl in Bezug auf neuartige biometrische Verifikationsverfahren, als auch in Bezug auf neuartige Endgeräte und Endgerätekonfigurationen, angepasst werden.

### Bezugszeichenaufstellung:

- SL: Steuerlogik
- TA: Modul zur Bestimmung des Telekommunikationsanschlusses
- DS: sprachgesteuertes Dialogsystem
- V: Verifikations-Abfragemodul
- BK: Biometrik Kundenprofil
- PD: Provider Datenbank
- Dienst: D
- A: PC mit Scanner
- B: Handy mit Kamera
- C: Fax-Gerät
- N: Telekommunikationsnetz
- E: erfindungsgemäßes System
- BD: Datenbank für Biometrik Kundenprofil

## Patentansprüche

1. Verfahren zur Personen/Sprecherverifikation über Kommunikationssysteme auf der Basis von biometrischen Verifikationsverfahren,
**dadurch gekennzeichnet, dass** für jeden Kunden, entsprechend seinen Kommunikationsdaten und seinem Kommunikationsverhalten, ein individuelles Biometrik Kundenprofil (BK) erstellt wird, in dem alle dem Kunden zur Verfügung stehenden Endgeräten und Endgerätekonfigurationen in Verbindung mit den jeweiligen Anschlusskennungen gespeichert sind, die für eine Verifikation anhand biometrischer Daten geeignet sind, und dass jeder Anschlusskennung das biometrische Verifikationsverfahren bzw. die biometrischen Verifikationsverfahren zugeordnet sind, deren technische Durchführbarkeit mittel des Endgerätes bzw. der Endgerätekonfiguration des Kunden technisch möglich ist, wobei alle biometrischen Grunddaten des Kunden, die für eine Verifikation anhand möglicher biometrischer Verifikationsverfahren benötigt werden, im Rahmen eines Registrierungsprozesses abgefragt und ebenfalls im Biometrik Kundenprofil (BK) erfasst werden, und dass in einer Provider Datenbank (PD) alle über biometrische Verifikationsverfahren geschützten Dienste in Verbindung mit den Zugangsadressen und den für den Zugang zu den Diensten zugelassenen biometrischen Verfahren gespeichert sind, und dass bei einem Zugangswunsch eines Kunden zu einem mittels biometrischer Verifikationsverfahren geschützten Dienst über eine matrixartige Steuerlogik (SL) in Verbindung mit einem Modul zur Bestimmung des Telekommunikationsanschlusses (TA), anhand der Anschlusskennung des Endgerätes des anrufenden Kunden in Verbindung mit der Zugangsrufnummer/Zugangskennung des gewünschten Dienstes (D) aus den im Biometrik Kundenprofil (BK) des Kunden und den in der Provider Datenbank (PD) gespeicherten Informationen, dem Kunden zu den im Rahmen des gewünschten Dienstes zugelassenen biometrischen Verifikationsverfahren, vorzugsweise über ein als Verifikations-Abfragemodul (V) ausgebildetes Sprachdialogsystem (DS), bei Bedarf nacheinander alle Verifikationsmöglichkeiten angeboten werden, die in seinem persönlichen Biometrik Kundenprofil (BK) entsprechend der ihm zur Verfügung stehenden Endgeräte und/oder Endgerätekonfigurationen abgespeichert sind.

2. Verfahren nach Anspruch 1, **dadurch gekennzeichnet, dass** aus der Vielzahl der für den Kunden ermittelten Verifikationsmöglichkeiten dem Kunden nacheinander alternative Verifikationsmöglichkeiten angeboten werden, wobei dem Kunden nach erfolglosem Abschluss eines ersten Verifikationsversuches aus den noch zur Verfügung stehenden alternativen Verifikationsverfahren vorzugsweise ein Verifikationsverfahren angeboten wird, für dessen Durchführung ein Wechsel der Kommunikationsverbindung erforderlich ist.

3. System zur Personen/Sprecherverifikation über Kommunikationssysteme, bestehend aus einer Steuerlogik (SL), mit Zugriff auf ein sprachgesteuertes Dialogsystem (DS) mit für die Abfrage abgespeicherten Verifikationsdialogen, einem Modul zum Bestimmen des Telekommunikationsanschlusses (TA), einer Biometrik Kundenprofil Datenbank (BD) mit den Biometrik Kundenprofilen (BK) aller Kunden, und einer Provider Datenbank (PD),
wobei das Biometrik Kundenprofil (BK) die Namen der Kunden, die bei den Kunden vorhandenen Endgeräte/Endgerätekonfigurationen mit den dazugehörenden örtlichen Zuordnungen und die Anschlusskennungen, die zu jedem Endgerät bzw. zu jeder Endgerätekonfiguration möglichen biometrischen Verifikationsverfahren und die für das jeweilige biometrische Verifikationsverfahren erforderlichen biometrischen Grunddaten des jeweiligen Kunden enthält, und dass in der Provider Datenbank (PD) alle Zugangsrufnummern/Zugangsadressen zu Datenbankbereichen/Diensten (D) enthalten sind, deren Zugang mittel biometrischer Verifikationsverfahren geschützt ist, wobei zu jedem geschützten Datenbankbereich/Dienst (D) alle für den Zugang zugelassenen biometrischen Verifikationsverfahren abfragebereit abgespeichert sind.

4. System nach Anspruch 3, **dadurch gekennzeichnet, dass** die Steuerlogik (SL) nach dem Prinzip einer Steuermatrix aufgebaut ist.
